Europäisches Patentamt

European Patent Office

Office européen des brevets

(11) Numéro de publication: **0 398 769**
**A1**

## DEMANDE DE BREVET EUROPEEN

(21) Numéro de dépôt: 90400906.5

(51) Int. Cl.⁵: **E04F 21/00, B23P 19/04**

(22) Date de dépôt: **03.04.90**

(30) Priorité: **17.05.89 FR 8906441**

(43) Date de publication de la demande:
**22.11.90 Bulletin 90/47**

(84) Etats contractants désignés:
**AT BE CH DE DK ES GB GR IT LI LU NL SE**

(71) Demandeur: **FERCO INTERNATIONAL Usine de Ferrures de Bâtiment Société à responsabilité limitée**

**2, rue du Vieux-Moulin Reding**
**F-57400 Sarrebourg(FR)**

(72) Inventeur: **Kautt, Jean-Jacques**
**24, rue Pertois**
**F-67000 Strasbourg(FR)**

(74) Mandataire: **Rodhain, Claude et al**
**Cabinet Claude Rodhain 30, rue la Boétie**
**F-75008 Paris(FR)**

(54) Machine de pose automatique de joint souple en particulier d'un joint de fond de vitrage ou d'un joint de parclose.

(57) L'invention concerne une machine pour la pose automatique de joint souple, en particulier d'un joint souple de fond de vitrage ou d'un joint de parclose, cette machine comportant une table de chargement, un dispositif de stockage du joint et un dispositif de pose et de découpe de ce dernier.

Cette machine est remarquable en ce qu'elle comporte une tête de manipulation rotative par rapport au chariot de commande de déplacement dans le plan parallèle au plan parallèle de l'ouvrant et comprenant des moyens de guidage d'entraînement du joint, des moyens de coupe du joint et des moyens de pose du joint, ces moyens étant montés sur deux unités (10) et (30) pouvant être translatées vers le haut et vers le bas par rapport à une plaque support (52) montée pivotante selon un axe horizontal (53, 54) par rapport à un fût vertical tournant du chariot de commande.

Cette machine permet la pose du joint de façon automatique, continue et dynamique sans arrêt entre les différentes opérations.

FIG. 2

EP 0 398 769 A1

L'invention concerne une machine pour la pose automatique de joint souple, en particulier d'un joint souple de vitrage, cette machine comportant une table de chargement, un dispositif de stockage du joint et un dispositif de pose et de découpe de ce dernier.

Un vantail réalisé en bois, en matière plastique, en aluminium ou équivalent est généralement constitué de deux traverses horizontales et de deux montants verticaux formant un cadre qui reçoit sur sa périphérie extérieure des ferrures permettant son articulation ou son support sur le dormant. Les montants et traverses comportent des épaulements intérieurs destinés à recevoir l'élément de vitrage ou analogue d'une part et des feuillures externes recevant selon le cas divers éléments de ferrure d'autre part.

Traditionnellement, le joint de fond de vitrage, ainsi que celui posé sur le vitrage et/ou sur les parcloses sont mis en place manuellement.

En général, le battant est posé horizontalement ; le joint préformé en butyle, stocké sur support papier, est mis en place sur le fond de la feuillure interne du battant ; le vitrage est posé ; un second joint préformé en butyle est mis en place et la parclose est installée ; tous ces éléments superposés sont pressés horizontalement afin d'obtenir une compression adéquate des joints et la parclose est fixée mécaniquement, en général par clouage. Ces opérations sont complétées par une finition, consistant à découper les bavures de butyle, débordant sur le vitrage.

Afin de supprimer cette opération de découpe des bavures, il est parfois pratiqué une rainure dans le fond de feuillure interne du battant ou de la parclose, dans laquelle est inséré le joint qui de ce fait ne déborde pas latéralement sur le vitrage, l'excédent du joint étant absorbé dans la rainure.

La présente invention propose une machine permettant la pose et la découpe automatique du joint de vitrage comportant un mécanisme d'amenage, de mise en référence et de mesure du vantail et permettant la pose du joint de façon automatique, continue et dynamique sans arrêt entre les différentes opérations.

Le portique support et le dispositif de déplacement comprenant un bâti, un portique mobile en translation sur ce bâti et un chariot mobile en translation sur ce portique, ce dernier étant destiné à supporter une tête de manipulation rotative par rapport au chariot, sont ceux décrits dans la demande de brevet français 89 03 090 déposée le 9 mars 1989 au nom de la demanderesse.

Le dispositif de pose et de découpe du joint comprend un bâti recevant un portique. Ce portique assure, de manière connue en soi, des mouvements croisés pour permettre des opérations à partir d'une tête de manipulation.

Le bâti et le portique ainsi que leurs moyens de déplacement sont des moyens connus en soi, par contre, il est à remarquer que leurs déplacements sont mis à profit pour approvisionner le joint.

Le chariot est pourvu en son centre d'un fût vertical tournant, entraîné en rotation par un moteur réducteur à axe vertical et transmission par chaîne. Ce fût vertical reçoit en partie basse la tête de manipulation du joint, tandis que son ouverture centrale permet le passage des câbles ou tuyaux d'alimentation de la tête de pose et de ces accessoires ainsi que le passage de joints. La rotation du fût comporte quatre positions d'arrêt à 90° correspondant aux quatre côtés du châssis de fenêtre. La rotation est limitée à 360° avec un retour à la position centrale à chaque changement de châssis pour limiter la torsion des câbles, tuyaux et joints passant à travers le fût. Ce mode de fonctionnement, bien entendu, n'est pas limitatif, puisque la position du fût peut être programmée pour réaliser l'équipement de vantaux de formes parallélépipédiques diverses ou même de vantaux ronds ou de n'importe quelle forme.

La tête de manipulation quant à elle est fixée par vissage ou analogue sur l'épaisseur de la paroi du fût et se situe sous le chariot du portique.

L'invention concerne donc une machine pour la pose automatique de joints, en particulier d'un joint de fond de vitrage ou d'un joint de parclose, comportant un mécanisme d'amenage, de mise en référence et de mesure du vantail, un portique support, un système de dévidage du joint et un dispositif de pose et de découpe du joint comprenant un bâti, un portique mobile en translation sur ce bâti et un chariot mobile en translation sur ce portique. Elle est remarquable en ce que le chariot mobile supporte une tête de manipulation rotative par rapport au chariot et comprenant des moyens de guidage du joint, des moyens de coupe du joint et des moyens de pose du joint, ces moyens étant montés sur deux unités pouvant être translatées vers le haut et vers le bas par rapport à une plaque support montée quant à elle pivotante selon un axe horizontal par rapport au fût vertical tournant dudit chariot mobile de commande du déplacement en plan parallèle au plan de l'ouvrant.

La première unité est une unité de début de pose et comprend un moyen de guidage du joint, des moyens d'enlèvement du papier protecteur, un moyen de pose du joint et un moyen de coupe du joint.

La seconde unité est une unité de fin de pose et comprend des moyens d'appui, un moyen de retenue du joint et un moyen de pose de l'extrémité du joint.

Selon un agencement préféré, le moyen de pose du joint de l'unité de début de pose est un galet libre en rotation ; le moyen de coupe du joint est un bloc de coupe situé en aval du moyen de pose et comprenant un dispositif de retenue du joint et un dispositif de cisaille ; de préférence ce dispositif de retenue du joint est constitué d'une chambre d'aspiration et ce dispositif de cisaille est constitué d'une enclume solidaire du bloc de coupe et d'un couteau monté pivotant par rapport à un axe parallèle à la direction longitudinale de la traverse à équiper ; les moyens d'enlèvement du papier protecteur comprennent deux galets dont l'un est en prise avec le galet de pose pour séparer le joint et le papier et dont l'autre guide le papier vers un dispositif d'évacuation ; ce dispositif d'évacuation est de préférence constitué d'un tuyau relié à une pompe à vide ; le moyen de guidage de l'unité de début de pose est un galet situé en amont du galet de pose.

Selon un agencement préféré, le moyen d'appui de l'unité de fin de pose est constitué d'un galet libre en rotation ; le moyen de retenue du joint est constitué d'une chambre d'aspiration située en amont du moyen d'appui ; le moyen de pose de l'extrémité du joint est constitué d'un vérin d'appui ponctuel solidaire de la chambre d'aspiration dont la tige de pression est dirigée vers le bas.

De préférence, chaque unité est translatable vers le haut et vers le bas grâce à une dispositif de crémaillère et de chariot rotatif.

La commande de mouvement des éléments mobiles est réalisée par des vérins hydrauliques ou pneumatiques.

L'invention est exposée ci-après plus en détail à l'aide de dessins représentant seulement un mode d'exécution.

- Les figures 1A à 1C sont des sections d'un des montants du vantail illustrant l'équipement du cadre par le joint de fond de vitrage, la vitre, le joint de parclose et la parclose,

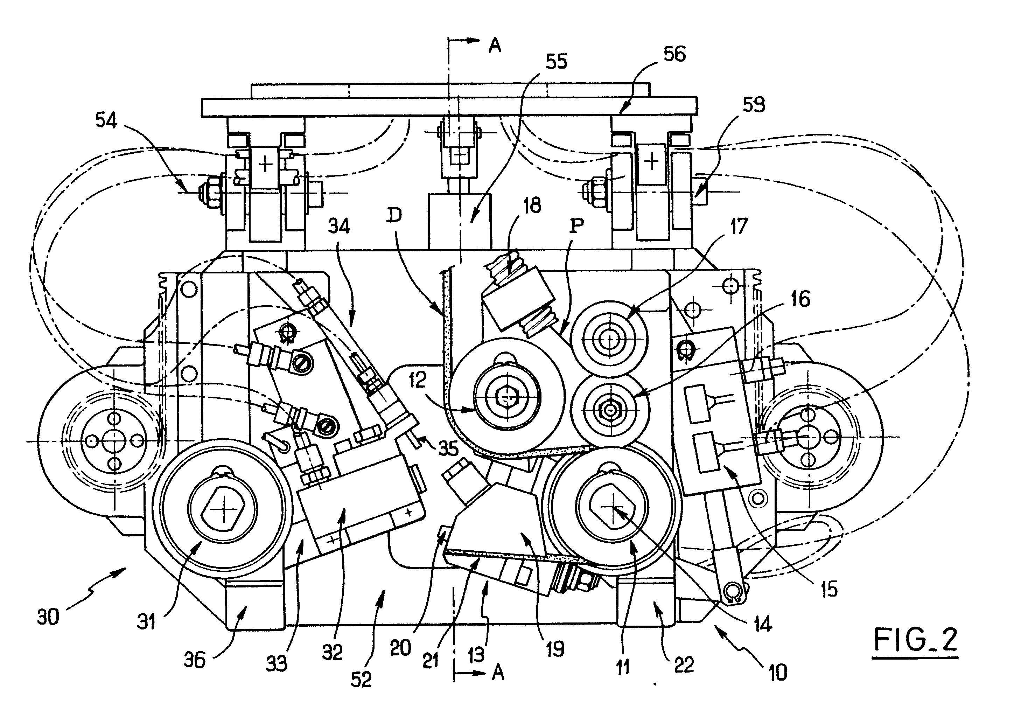

- la figure 2 est une vue de face de la tête de manipulation conforme à l'invention,

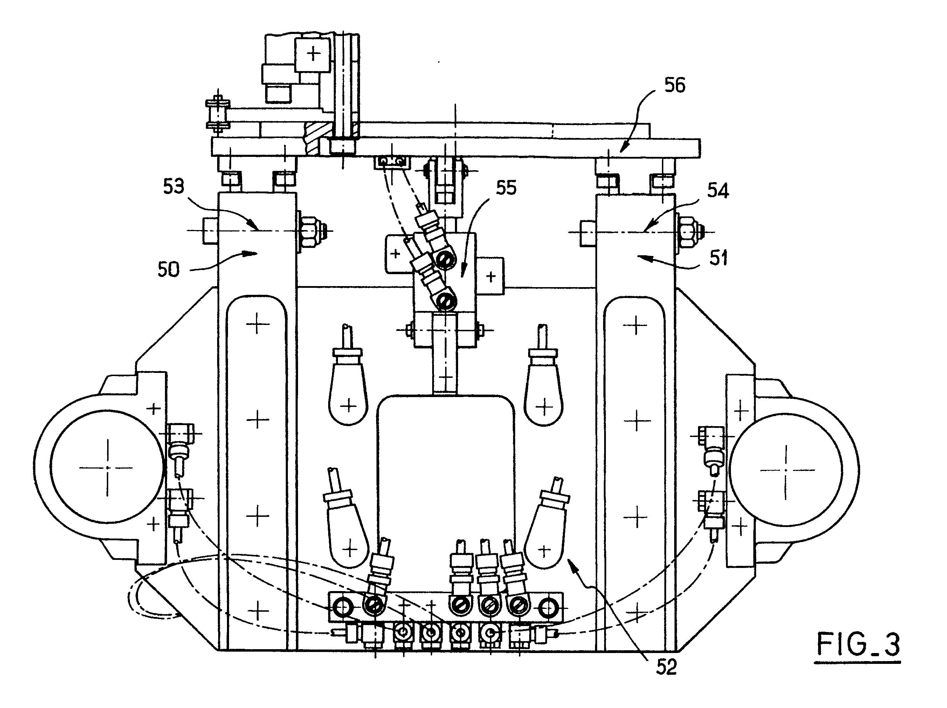

- la figure 3 est une vue arrière de la tête de manipulation conforme à l'invention,

- la figure 4 est une vue de droite de la tête de manipulation conforme à l'invention,

- la figure 5 est une vue de gauche de la tête de manipulation conforme à l'invention,

- la figure 6 est une vue en coupe AA de la tête de manipulation conforme à l'invention,

- les figures 7 à 13 sont des vues de côté ou arrière partielles ou complètes, illustrant la pose d'un joint à l'aide de la tête de manipulation conforme à l'invention.

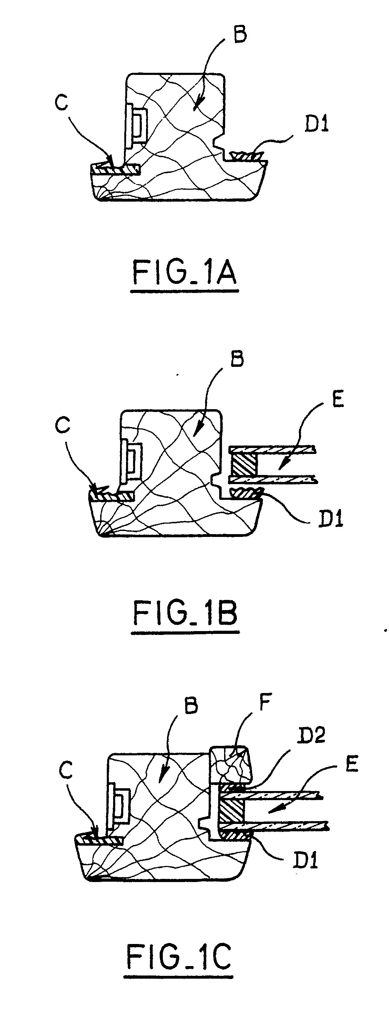

Comme représenté sur les figures 1A à 1C, dans la chaîne de montage, le vantail B est équipé de son joint extérieur C et doit être pourvu de son joint de fond de vitrage D1, puis de son vitrage E, et de sa parclose F, équipée de son joint D2.

La machine conforme à l'invention est destinée à la pose des joints D1 et D2 sur respectivement le vantail B et la parclose F et dans la suite de la description, ce joint sera référencé de façon générique par D et seule la pose sur vantail B est décrite. Il va de soi que le battant B peut être remplacé par une parclose F.

Comme il a été précisé plus haut, la tête de manipulation est destinée à être montée sous un fût vertical tournant d'un chariot de commande de déplacement.

La tête de manipulation comporte deux unités de pose : l'unité de début de pose 10 et l'unité de fin de pose 30 dont le fonctionnement sera décrit plus précisément plus loin.

L'unité de début de pose 10 comporte deux galets principaux 11 et 12. Le galet 11 est un galet de pose du joint et le galet 12 est un galet de guidage du joint. Ce dernier arrive verticalement au travers du fût pour venir en prise avec le galet principal 12 et ensuite effectuer sensiblement une boucle autour du galet 11. Ces deux galets sont libres en rotation, c'est-à-dire non motorisés ; en effet c'est le joint déjà fixé sur le battant qui tire sur le joint à alimenter et qui entraîne en rotation les galets 11 et 12 et permet ainsi l'alimentation en joint D. Afin d'éviter sa déformation, le joint D est pourvu, en général, d'un fil interne d'anti-étirement.

L'unité de début de pose 10 est également pourvue d'un bloc de coupe 13 situé en aval du galet 11 et qui supporte le joint D par dépression ou mécaniquement. Ce bloc de coupe 13 est monté oscillant perpendiculairement au plan de l'ouvrant autour de l'axe 14 du galet de pose 11. Ce bloc 13 est entraîné en déplacement par le vérin 15.

Le joint D est pourvu d'une bande de papier de protection, qui doit être retirée au fur et à mesure de la pose du joint sur le vantail D. Cet enlèvement du papier P est réalisé grâce à deux galets 16 et 17. Le premier galet 16 coopère avec le galet de pose 11 pour réaliser l'enlèvement du papier P. Le joint arrive du galet 12 avec son papier entre les deux galets 11 et 16 ; le papier P est alors guidé quant à lui autour du galet 16 puis entre les deux galets 16 et 17 et aspiré par une pompe à vide pour être évacué dans le tuyau 18. Le galet de pose 11 et le galet d'enlèvement du papier 16 sont munis l'un et l'autre d'une garniture élastique, afin de ne pas écraser le joint D.

Selon un mode de réalisation préféré, tous ces galets sont libres en rotation ; le galet 11 est entraîné en rotation par le joint D déjà fixé, et entraîne en rotation le galet 16 qui lui-même entraîne le galet 17.

Selon une variante, le galet 17 peut être motorisé afin de réguler la vitesse du galet d'enlèvement du papier 16.

De façon plus générale, un dispositif de traction du papier P décollé entre les galets 16 et 17 peut être prévu et a pour avantage d'entraîner en même temps le joint et ainsi de réaliser l'alimentation en joint D. Dans ce cas, la vitèsse de traction du papier doit être précisément réglée afin de ne pas entraîner une désynchronisation des vitesses du papier enlevé et du joint libéré de son papier.

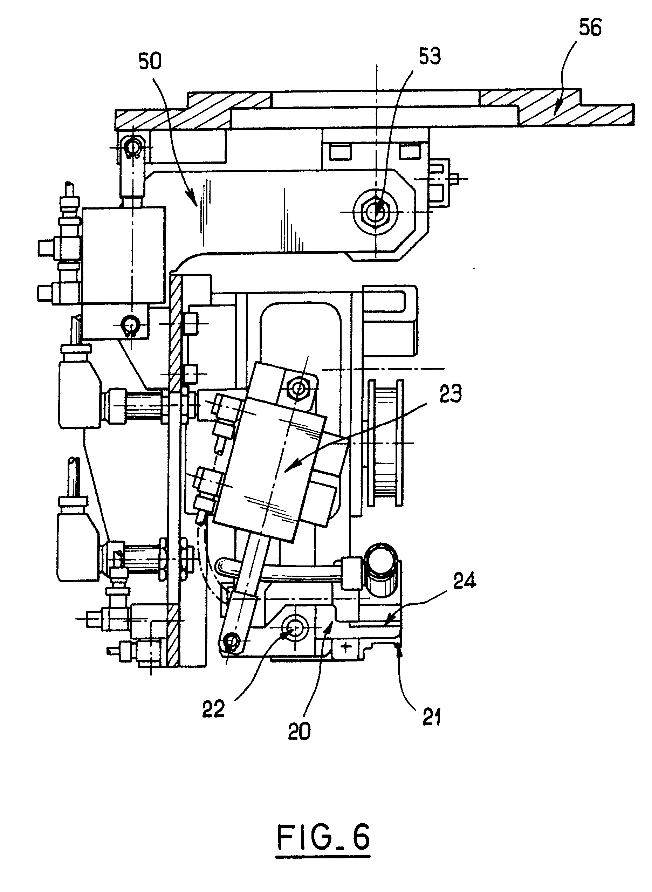

Le bloc de coupe 13 de l'unité de début de pose 10 comprend une chambre d'aspiration 19 retenant le joint D et un dispositif de cisaille constitué d'un élément de couteau 20 et d'un élément d'enclume 21. Le bloc de coupe 13 est visible vu de gauche sur la figure 6. Il comporte donc une enclume 21 fixe par rapport au bloc 13 et comportant une rainure dirigée vers le bas et destinée au guidage du joint D. Il est également équipé d'un élément de couteau 20 pivotant par rapport à un axe 22 parallèle à la direction longitudinale de la traverse du vantail et commandé par un vérin 23. Sur la figure 6, le couteau 20 est représenté en position dite fermée, à savoir en position inactive. La traction de la tige du vérin 23 entraîne la descente du couteau 20 en position dite ouverte ; en remontant le couteau 20 enserre le joint D et le coupe grâce à sa partie coupante supérieure 24.

L'unité de fin de pose 30 comporte un galet d'appui 31 libre en rotation, une chambre d'aspiration 32 et un vérin 34 d'appui ponctuel.

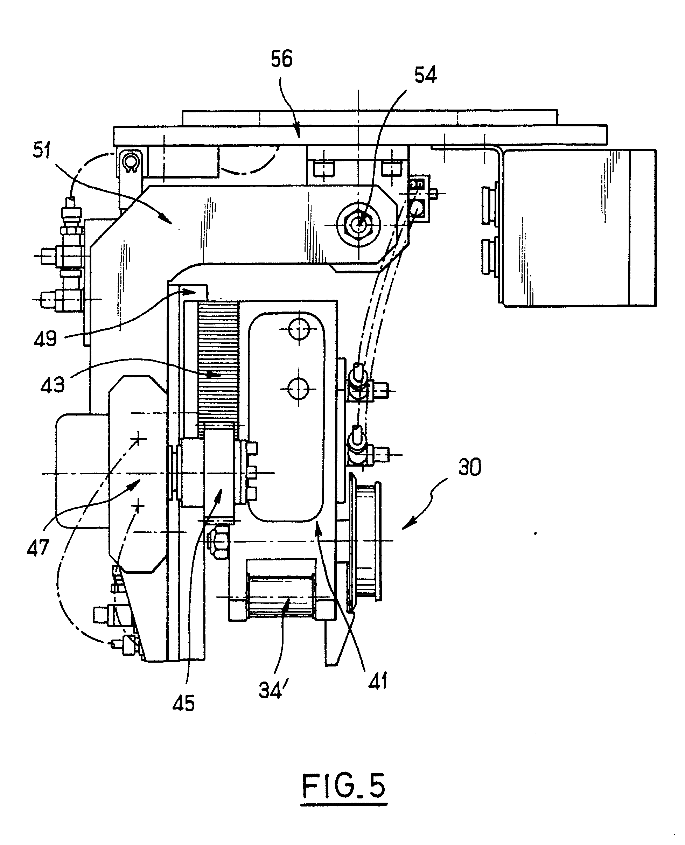

La chambre d'aspiration 32 est destinée à retenir le joint D après sa coupe par le bloc de coupe 13 de l'unité de début de pose 10, à le rabattre et le presser en fin de pose contre la surface de vantail. Pour ce faire, la chambre d'aspiration 32 est montée sur un bras 33 oscillant autour d'un axe 34' grâce à un système de chape et commandée par un vérin, comme l'on peut le voir sur la figure 5.

Solidaire de la chambre d'aspiration 32, est mis en place un vérin 34 dont la tige 35 est dirigée vers le bas et légèrement inclinée ; cette tige 35 est destinée à venir presser l'extrémité du joint D coupée dans l'angle du vantail B.

Les unités 10 et 30 sont chacune pourvues d'un patin de guidage 22 et 36, qui est destiné à venir en appui latéral contre la feuillure intérieure du vantail B et à guider la tête de manipulation.

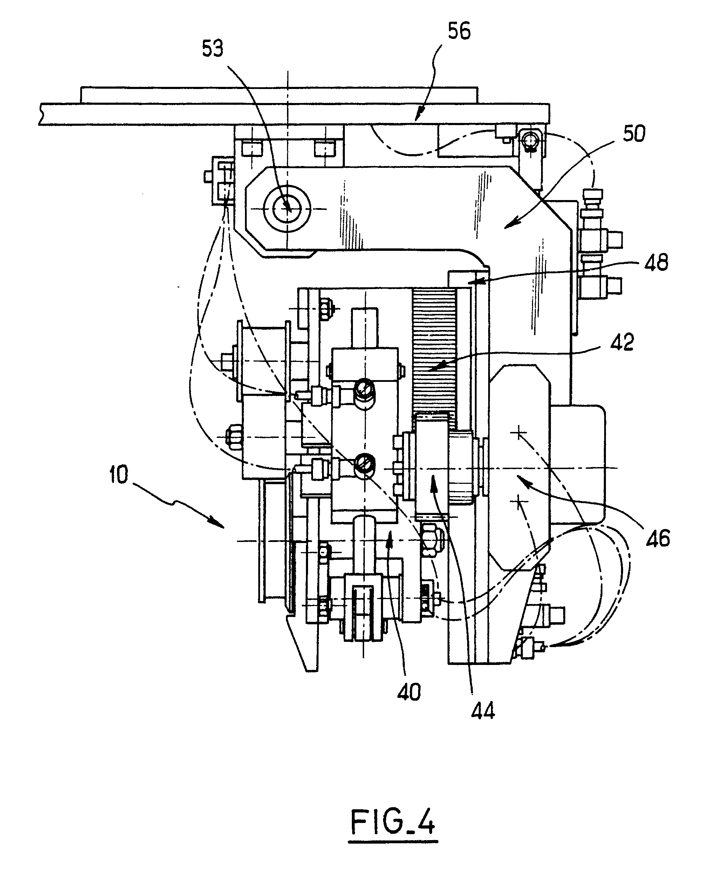

Comme il est particulièrement visible sur les figures 4 et 5, les deux unités 10 et 30 sont montées, l'une comme l'autre respectivement, sur un support 40, 41. Chaque support 40, 41 comporte une crémaillère 42, 43 qui vient en prise avec un chariot 44, 45 de commande de la translation verticale de chaque unité 10 et 30. Pour ce faire, chaque chariot 44, 45 est entraîné par un vérin rotatif 46, 47. Le guidage vertical des crémaillères 42, 43 est complété par un rail de guidage 48, 49.

Chacun de ces ensembles est monté sur une potence 50, 51. Les deux potences 50 et 51 sont fixées l'une à côté de l'autre sur une plaque support commune 52.

L'extrémité supérieure de chaque potence 50, 51 est montée pivotante autour de deux axes horizontaux alignés 53, 54. La rotation de l'ensemble mobile de la tête de manipulation, ainsi formé, est commandée par un vérin central 55. Les deux axes 53, 54 font partie d'articulations avec une plaque de liaison horizontale 56 destinée à être montée sur le fût vertical rotatif du chariot de commande de déplacement en plan parallèle au plan général de l'ouvrant.

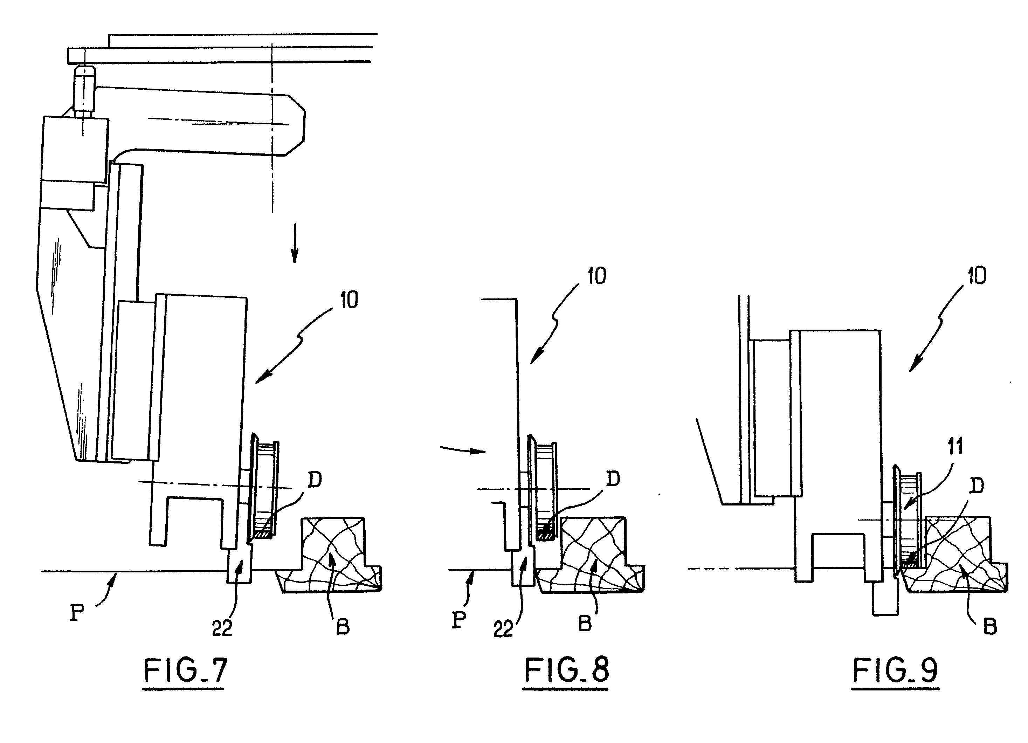

La mise en place d'un joint D de fond de vitrage sur la feuillure interne d'un battant B à l'aide d'une tête de manipulation conforme à l'invention, va maintenant être décrite à l'aide des figures 7 à 13.

En début de pose (figure 7), l'unité de début de pose 10 est descendue grâce à son agencement de chariot et dé crémaillère, afin que le patin de guidage 22 pénètre dans le plan P du fond de feuillure interne du battant B.

Puis l'unité de début de pose 10 est pivotée (figure 8) pour que le patin de guidage 22 vienne en butée latérale intérieure contre le battant B.

L'unité 10 est alors abaissée pour que le galet 11 vienne appliquer le joint et le coller contre le fond de feuillure interne du battant B (figure 9).

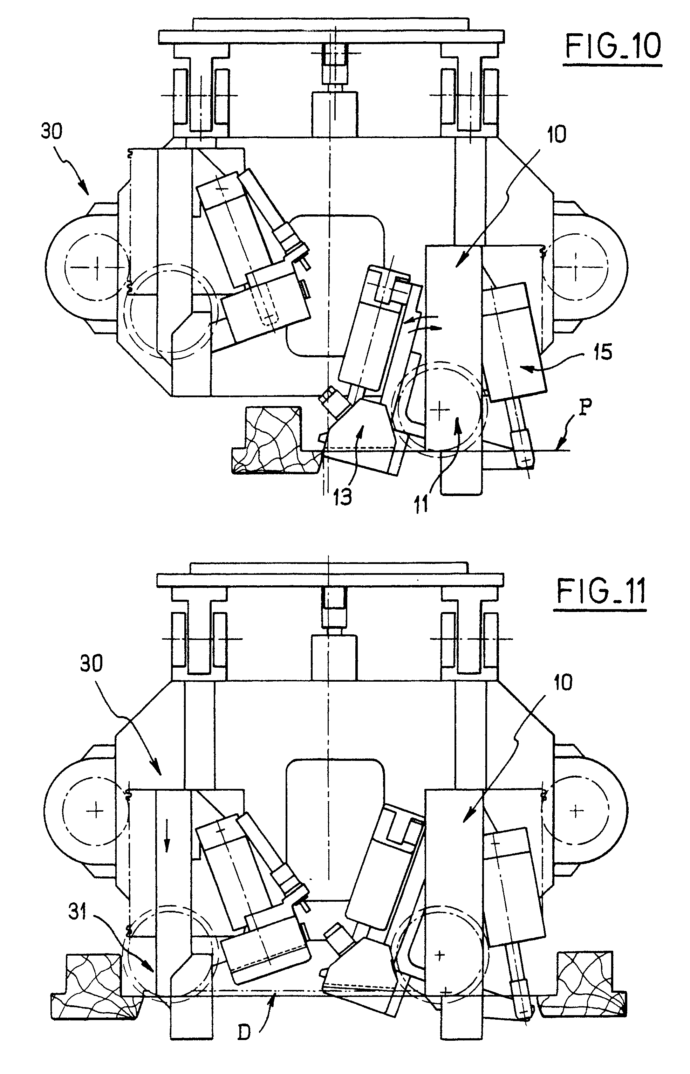

Cette dernière position est également représentée en vue arrière sur la figure 10. L'unité de début de pose 10 presse et colle le joint d'une part par le galet 11 et d'autre part par le bloc 13, qui est pivoté contre le joint grâce au vérin 15. L'unité de fin de pose 30 est quant à elle en position inactive, c'est-à-dire dans sa position la plus haute.

Dès que la tête de manipulation est suffisamment avancée le long de la feuillure du battant, pour dégager un espace suffisant ou pour se trouver à une certaine distance de la traverse suivante perpendiculaire, l'unité de fin de pose 30 est mise en action (figure 11). Elle est donc descendue grâce à son agencement de chariot et de crémaillère, afin que le galet d'appui 31 vienne en contact avec le joint déjà posé sur le fond de feuillure du battant B.

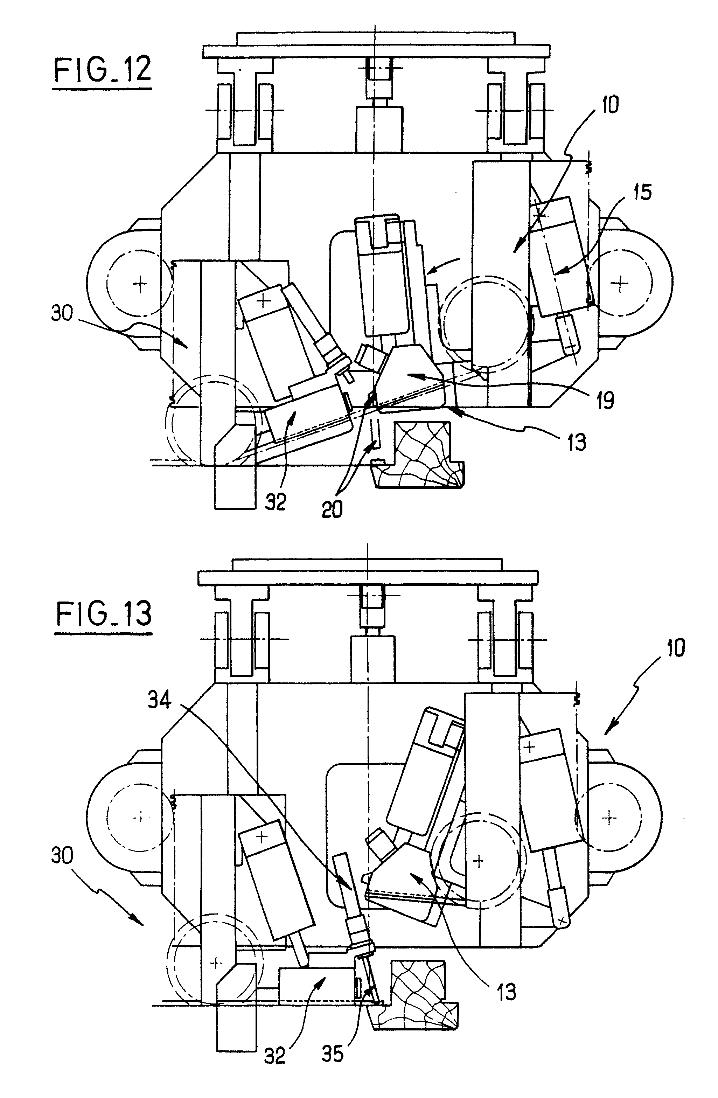

Lorsque la tête de manipulation arrive en fin de course, à savoir, à proximité de la traverse perpendiculaire suivant, l'unité de début de pose 10 est montée grâce à son agencement de chariot et de crémaillère (figure 12). Simultanément, son bloc de coupe 13 est pivoté grâce au vérin 15 pour permettre l'ouverture du couteau 20 (de la position représentée en trait plein à la position représentée en trait mixte). Le joint vient alors en appui sur les chambres d'aspiration 19 et 32 et y est retenu.

Ainsi le joint est coupé (figure 13) par le bloc de coupe 13 grâce à la remontée du couteau 20. La chambre d'aspiration 32 est alors pivotée vers le bas pour venir poser et presser le joint contre le fond de feuillure. Enfin, le vérin d'appui ponctuel 34 est mis en action et sa tige 35 descendue presse et colle l'extrémité libre du joint.

## Revendications

1) Machine pour la pose automatique de joint souple, en particulier d'un joint de fond de vitrage ou d'un joint de parclose, comportant un mécanisme d'amenage, de mise en référence et de mesure du cadre, un portique support, un système de dévidage du joint et un dispositif de pose et de découpe du joint comprenant :
- un bâti,
- un portique mobile en translation sur ce bâti,
- un chariot mobile en translation sur ce portique, caractérisée en ce que ledit chariot mobile supporte une tête de manipulation rotative par rapport au chariot et comprenant des moyens de guidage du joint, des moyens de coupe du joint et des moyens de pose du joint, ces moyens étant montés sur deux unités (10) et (30) pouvant être translatées vers le haut et vers le bas par rapport à une plaque support (52) montée pivotante selon un axe horizontal par rapport à un fût vertical tournant dudit chariot mobile de commande du déplacement en plan parallèle au plan de l'ouvrant.

2) Machine selon la revendication 1, caractérisée en ce que la première unité est une unité de début de pose (10) et comprend un moyen de guidage du joint, des moyens d'enlèvement du papier protecteur, un moyen de pose du joint et un moyen de coupe du joint.

3) Machine selon l'une quelconque des revendications précédentes, caractérisée en ce que la seconde unité est une unité de fin de pose (30) et comprend des moyens d'appui, un moyen de retenue du joint et un moyen de pose de l'extrémité du joint.

4) Machine selon l'une quelconque des revendications 2 ou 3, caractérisée en ce que le moyen de pose du joint de l'unité de pose (10) est un galet (11) libre en rotation.

5) Machine selon l'une quelconque des revendications 2 à 4, caractérisée en ce que le moyen de coupe du joint est un bloc de coupe (13) situé en aval du moyen de pose de l'unité de début de pose (10) et comprenant un dispositif de retenue du joint et un dispositif de cisaille.

6) Machine selon l'une quelconque des revendications 2 à 5, caractérisée en ce que les moyens d'enlèvement du papier protecteur P comprennent deux galets (17) et (16) dont l'un (16) est en prise avec le moyen de pose (11) pour séparer le joint (D) et le papier (P) et dont l'autre (17) guide le papier (P) vers un dispositif d'évacuation.

7) Machine selon l'une quelconque des revendications 2 à 5, caractérisée en ce que le moyen de guidage de l'unité de début de pose (10) est un galet (12) situé en amont du galet (11).

8) Machine selon l'une quelconque des revendications 5 à 7, caractérisée en ce que le dispositif de retenue du joint du bloc de coupe (13) est constitué d'une chambre d'aspiration (19).

9) Machine selon l'une quelconque des revendications 5 à 8, caractérisée en ce que le dispositif de cisaille de l'unité de début de pose (10) est constitué d'une enclume (21) solidaire du bloc (13) et d'un couteau (20) monté pivotant par rapport à un axe (22) parallèle à la direction longitudinale de la traverse à équiper.

10) Machine selon l'une quelconque des revendications 6 à 9, caractérisée en ce que le dispositif d'évacuation du papier (P) est constitué d'un tuyau (18) relié à une pompe à vide.

11) Machine selon l'une quelconque des revendications 3 à 10, caractérisée en ce que le moyen d'appui de l'unité de fin de pose (30) est constitué d'un galet (31) libre en rotation.

12) Machine selon l'une quelconque des revendications 3 à 11, caractérisée en ce que le moyen de retenue du joint de l'unité de fin de pose (30) est constitué d'une chambre d'aspiration (32) située en amont du moyen d'appui.

13) Machine selon l'une quelconque des revendications 3 à 12, caractérisée en ce que le moyen de pose de l'extrémité du joint est constitué d'un vérin d'appui ponctuel (34) solidaire de la chambre d'aspiration (32) et dont la tige (35) de pression est dirigée vers le bas.

14) Machine selon l'une quelconque des revendications précédentes, caractérisée en ce que chaque unité (10) et (30) est translatable vers le haut et vers le bas respectivement grâce à un dispositif de crémaillère (42, 43) et de chariot rotatif (44, 45).

15) Machine selon l'une quelconque des revendications précédentes, caractérisée en ce que la commande de mouvement des éléments mobiles de la tête de manipulation est réalisée par des vérins hydrauliques ou pneumatiques.

FIG.1A

FIG.1B

FIG.1C

FIG_2

FIG_3

EP 0 398 769 A1

FIG_4

FIG.5

FIG. 6

EP 0 398 769 A1

FIG.7

FIG.8

FIG.9

FIG_10

FIG_11

FIG.12

FIG.13

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-3295195 (BURGIO)<br><br>* colonne 2, ligne 58 - colonne 11, ligne 21; figures 1-12 * | 1-3, 5, 9 | E04F21/00<br>B23P19/04 |
| A | FR-A-2520793 (MENUISERIE MARCEL THINET)<br><br>* page 2, ligne 30 - page 7, ligne 11; figures 1-8 * | 1, 4, 5, 11, 15 | |
| A | FR-A-2572123 (JAILLET)<br><br>* page 1, ligne 1 - page 4, ligne 8; figures 1-7 * | 1, 4, 5, 15 | |
| A | US-A-4766661 (CROTEAU)<br>* colonne 3, ligne 50 - colonne 10, ligne 5; figures 1-14b * | 1, 4 | |
| A | EP-A-0110156 (P R E H INDUSTRIEAUSRUSTUNGEN GMBH.)<br>* page 2, ligne 26 - page 10, ligne 18; figures 1-6 * | 1, 5, 7, 15 | DOMAINES TECHNIQUES RECHERCHES (Int. Cl.5 ) |
| A | DE-A-3143611 (ANTON HUBER GMBH & CO.)<br><br>* page 7, ligne 1 - page 11, ligne 10; figures 1, 2 * | 1, 6, 10, 15 | E04F<br>B23P |
| A | DE-A-3347699 (GEBERT)<br>* page 8, ligne 20 - page 13, ligne 5; figures 1-5 * | 1, 9, 15 | |
| A | US-A-2924007 (WRIGHTFIELD)<br>* colonne 2, ligne 50 - colonne 5, ligne 50; figures 1-7 * | 1, 13 | |

Le présent rapport a été établi pour toutes les revendications

| Lieu de la recherche | Date d'achèvement de la recherche | Examinateur |
|---|---|---|
| LA HAYE | 09 AOUT 1990 | AYITER J. |

EPO FORM 1503 03.82 (P0402)